# EUROPÄISCHE PATENTSCHRIFT

(11) **EP 2 110 328 B1**
(45) Veröffentlichungstag und Bekanntmachung des Hinweises auf die Patenterteilung: **27.04.2011**
(21) Anmeldenummer: 09155061.6
(22) Anmeldetag: 13.03.2009
(51) Int. Cl.: B65B 51/08, B65B 51/12, B65G 21/20

(54) **Verpackungsmaschine für Gebinde von Getränkebehältern**
Packaging machine for a plurality of individual drinks containers
Machine d'emballage pour gerbes de récipients de boissons

(30) Priorität: 15.04.2008 DE 102008019077
(43) Veröffentlichungstag der Anmeldung: 21.10.2009
(73) Patentinhaber: Krones AG, 93073 Neutraubling (DE)
(72) Erfinder: Spindler, Herbert, 83083 Riedering (DE)
(74) Vertreter: Benninger, Johannes

(56) Entgegenhaltungen:
- EP-A- 1 084 954
- CH-A- 394 933
- NL-C1- 1 014 204
- US-A- 3 504 478
- US-A- 4 548 025

## Beschreibung

Die vorliegende Erfindung betrifft eine Verpackungsmaschine für Gebinde von Flaschen und/oder Getränkebehältern.

Zum Verpackung von Gebinden mit mehreren Getränkebehältern und/oder Flaschen können die Getränkebehälter bzw. Flaschen auf Horizontalfördereinrichtungen gruppiert und in Gruppen mit einer definierten Anzahl von Behältern zusammengefasst werden. Diese definierte Anzahl von gruppierten Behältern werden zur besseren Handhabung meist mit einer Folienumhüllung versehen, so dass die Gebinde leicht transportiert, gestapelt und ggf. in dieser Gebindeform auch im Verkaufsraum präsentiert werden können.

Bei vielen Gebindearten, insbesondere bei größeren Gebinden ist es sinnvoll, alternativ oder zusätzlich zur Folienverpackung, die eine weitgehend vollständige Umhüllung der jeweiligen Gebinde bildet, eine Kartonverpackung anzubringen, die zumindest den Bodenbereich und Teile eines Randbereiches stabilisiert. Diese Kartonverpackungen werden dadurch angebracht, indem das Gebinde auf einem flachen Kartonbogen aufgestellt wird, dessen Ränder die Grundfläche des Gebindes an allen Seiten überragen. Die Ränder können anschließend im rechten Winkel nach oben gefaltet und an den überlappenden Seitenkanten und/oder an den Innenseiten miteinander verklebt werden. Zur Verklebung ist immer ein Überlappen der Seitenwände und Front-/Rückwände notwendig, da die überlappenden Abschnitte die Klebelaschen bilden. Die Seitenränder können eine typische Höhe aufweisen, die ungefähr einem Drittel der Höhe bis ungefähr der halben Höhe der Getränkebehälter bzw. Flaschen entsprechen kann. Je nach verpackten Gütern können jedoch auch andere Abmessungen der Seitenränder in Frage kommen.

Das Falzen und Umlegen des umlaufenden Kartonrandes des stabilisierenden Gebindebodens erfolgt meist mit Führungselementen, die zu beiden Seiten des Transportförderbandes angeordnet sind. Diese Führungselemente sorgen zunächst dafür, dass an einem bestimmten Punkt die seitlichen Ränder der Kartonverpackung nach oben gebogen und anschließend an die Seite des Gebindes angelegt werden, nachdem zuvor ein geeigneter Klebstoff wie ein Heißleim o. dgl. auf dafür vorgesehene Kartonklebelaschen aufgebracht wurde. Im Laufe des weiteren Transports des Gebindes sorgen die Führungselemente für ein Andrücken des Kartonrandes an die zuvor mit Klebstoff versehen Kartonklebelaschen. Als Gegenfläche zur Aufnahme des Drucks können dabei das Gebinde bzw. die Behälter im Karton sorgen, so dass der Karton während des Aushärtens des Klebstoffs stabilisiert wird.

Die erwähnten Führungselemente bestehen meist aus Kunststoff. Sie müssen einen Abstand aufweisen, der ein leichtes Passieren der Gebinde erlaubt, der jedoch auch dafür sorgt, dass die nach oben gefalteten Ränder der Kartonverpackung an die Seitenränder der Gebinde angedrückt werden, da andernfalls nicht zuverlässig gewährleistet werden kann, dass die Klebeverbindung eine ausreichende Stabilität aufweist. Die Gebinde dürfen deshalb nur sehr geringe Toleranzen hinsichtlich ihrer Abmessungen aufweisen, da ansonsten die zuverlässige Funktion der Führungselemente nicht sichergestellt ist.

Aus dem Stand der Technik sind bereits Verpackungsmaschinen mit Führungselementen bekannt. So offenbart beispielsweise die US 3 504 478 A eine Verpackungsmaschine mit einem auf einer Seite der Verpackungsmaschine angeordneten Abstreifer. Der Abstreifer ist an einem verstellbaren Element angeordnet. Sollen Kartonagen unterschiedlicher Größe transportiert und gefertigt werden, so muss jeweils eine Einstellung des Abstreifers über das verstellbare Element an die jeweilige Kartonagengröße erfolgen.

Weiterhin wird durch die EP 1 084 954 A2 ein Verfahren und eine Vorrichtung zum Herstellen von Zigarettenpackungen offenbart. Zum Transport von Zigarettenpackungen sind Bürstenelemente entlang des Transportweges angeordnet. Die Bürstenelemente sind während des Transportes von Zigarettenpackungen mit den Selbigen in Oberflächenkontakt gebracht.

Ferner offenbart die US 4 548 025 A eine Vorrichtung zum Verpacken von Gefäßen in Kartonagen. Im Rahmen der durch die US-Schrift offenbarten Vorrichtung werden Seiten eines Kartons durch Abstreifer aufgerichtet. Das Aufrichten der Abstreifer erfolgt durch einen Aktor. Wünschenswert wäre eine einfachere Konstruktion, bei welcher auf einen Aktor verzichtet werden kann.

Zudem offenbart die NL 1 014 204 C1 eine Leitvorrichtung, welche beispielsweise zum Transport von Getränkekästen verwendet werden kann. Hierbei sind entlang eines Fließbandes starre und sichelförmige Elemente über eine Feder rotierend an einer Halteschiene gelagert. Da die sichelförmigen Elemente einen gewissen Bewegungsraum zum Ausführen der Rotationsbewegung brauchen, können nur eine begrenzte Anzahl von sichelförmigen Elementen nebeneinander angeordnet werden. Hieraus resultiert ein inhomogener Anpressdruck, welcher von den sichelförmigen Elementen auf eine Längsseite des Getränkekastens übertragen wird.

Ein Ziel der vorliegenden Erfindung besteht darin, eine Verpackungsmaschine für Gebinde von Flaschen und Getränkebehältern sowie ein Führungselement für eine derartige Verpackungsmaschine zur Verfügung zu stellen, welche die Nachteile des Standes der Technik vermeiden. Insbesondere sollen die Verpackungsmaschine und die Führungselemente auch bei unterschiedlich großen Gebinden für eine gleichmäßige Verpackungsqualität sorgen. Ein weiteres Ziel der Erfindung besteht darin, ein entsprechendes Verfahren zur Verpackung von Gebinden zur Verfügung zu stellen, das eine hohe Verpackungsqualität ermöglicht.

Diese Ziele der Erfindung werden mit dem Gegenstand des Anspruchs 1 erreicht. Merkmale vorteilhafter Weiterbildungen der Erfindung ergeben sich aus den abhängigen Ansprüchen.

Die Erfindung umfasst eine Verpackungsmaschine für Gebinde von Flaschen und/oder Getränkebehältern mit einer Horinzontalfördereinrichtung für die zu Gebinden gruppierten und/oder mit einer Umhüllung aus Folie o. dgl. versehenen Getränkebehälter. Die Verpackungsmaschine weist eine Einrichtung zur Zuführung von flachen Kartonbögen an der Bodenseite der Gebinde auf. Diese Gebinde werden jeweils auf dem Kartonbogen stehend gefördert. Es sind Einrichtungen vorhanden, die in Transportrichtung vordere und hintere Randabschnitte des Kartonbogens, welche jeweils die Grundfläche des/der Gebinde überragen, nach oben falten. Weiterhin sind seitliche Führungselemente zum Anpressen von überlappenden Randabschnitten und/oder zum Falten von in Transportrichtung seitlich über die Grundfläche des Gebindes bzw. der auf dem Karton stehenden Behälter überstehenden Rändern des Kartonbogens nach oben vorgesehen. Die überlappenden Abschnitte sind zuvor mit Klebemittel versehen und werden mittels der Führungselemente angedrückt bzw. angepresst. Damit die überlappenden Abschnitte der nach oben gefalteten Ränder aneinander haften und eine stabile Schale für die Behälter und/oder Gebinde bilden, sind sie zuvor an einander zugewandten Flächen mit einem Klebemittel versehen. Die seitlichen Randabschnitte werden mit Hilfe der Führungselemente seitlich an das Gebinde angedrückt, wobei gleichzeitig die Klebeverbindungen verpresst werden. Es versteht sich von selbst, dass für die Funktion der Erfindung die überlappenden Abschnitte in Transportrichtung seitlich an der Kartonschale angeordnet sind, so dass auch die miteinander zu verklebenden Flächen von den Führungselementen gegeneinander gedrückt werden können.

Gemäß der Erfindung üben die Führungselemente zumindest abschnittsweise eine definierte Andrückkraft auf die nach oben gefalteten Ränder des Kartonbogens, wobei die Seitenflächen des Gebindes eine abstützende Gegenfläche bilden. Dies wird dadurch erreicht, dass die Führungselemente zumindest abschnittsweise elastisch ausgebildet sind. In diesem Zusammenhang kann insbesondere ein seitlicher Abstand der gegenüberliegend angeordneten Führungselemente in entspannter Lage geringer sein als eine Breite eines zwischen den Führungselementen hindurch geförderten Gebindes. Die elastisch nach außen ausweichenden Führungselemente können auf diese Weise eine Andrückkraft auf die nach oben gefalteten Ränder des Kartons in Richtung zu den Seiten des Gebindes ausüben und dadurch zudem das Aushärten der Klebeverbindung unterstützen, mit der die überlappenden Randabschnitte miteinander verbunden und gegeneinander verpresst werden, um eine stabile Kartonschale zu bilden. Die Leimspuren werden gleichzeitig verpresst und ausgehärtet. Der Abstand der beiden gegenüber liegend angeordneten Führungselemente kann wahlweise auch ungefähr dem Außenmaß des Kartons entsprechen.

Die Führungselemente sind jeweils durch eine Vielzahl von nebeneinander angeordneten Blattfederelementen gebildet, die eng voneinander beabstandet angeordnet sind, so dass an die zwischen den Führungselementen hindurch geförderten Gebinde die,nach oben gefalteten Kartonränder angedrückt werden. Die Federelemente sind aus federelastischem Metall gefertigt.

Wesentlich für die Funktion der Führungselemente ist es, dass die Federelemente eine federnde Nachgiebigkeit in horizontaler Richtung aufweisen, so dass eine seitliche Andrückkraft auf die an den Führungselementen vorbei geförderten Gebinde ausgeübt wird. So sind die Federelemente jeweils einseitig an Halteschienen befestigt und als Blattfedern ausgebildet, an deren freiem Ende die Gebinde vorbei streifen, wobei gleichzeitig die Blattfedern mehr oder weniger stark verformt werden. So weist ein freies Ende jedes Federelements in Transportrichtung der Horizontalfördereinrichtung schräg von der Halteschiene weg und kann durch das anliegende und gleitend daran vorbei geförderte Gebinde in Richtung zur Halteschiene gedrückt werden.

Weiterhin können in Transportrichtung vor den Führungselementen jeweils keilförmige Abweiser zum Aufrichten der seitlich über das Gebinde ragenden Kartonränder und zum Anlegen der Ränder an die Seitenflächen des Gebindes angeordnet sein. Diese Abweiser dienen dazu, die zunächst flach liegenden und ggf. über Perforationen oder Sollknickstellen verfügenden Kartonränder leicht anzuheben und in ihre vorgesehene Position zu überführen, in der sie dann mittels der Führungselemente an die seitlichen Ränder der Gebinde angedrückt und/oder angeklebt werden.

Die Federelemente können wahlweise starr oder jeweils elastisch an den seitlichen Halteschienen verankert sein. Vorzugsweise sind die Federelemente jeweils Wärme leitend ausgebildet, so dass sie zusätzlich dazu dienen können, überschüssige Wärme von den Klebestellen des Kartons aufzunehmen. Da die Kartonränder meist mit Heißleim verklebt werden, können die Federelemente somit auch zur Abführung der im Heißleim befindlichen Wärmeenergie dienen, was die schnellere Aushärtung der Klebeverbindung fördert. Um eine gute Wärmeleitung zu gewährleisten, können die Federelemente insbesondere jeweils aus Metall gefertigt sein. Eine optionale elastische Aufhängung der Federelemente kann so dimensioniert sein, dass ein definierter Wärmeübergang an die Halteschienen gewährleistet ist.

Wenn im vorliegenden Zusammenhang von Gebinden die Rede ist, so können dies bspw. Gebinde von Getränkebehältern oder Flaschen sein. Derartige Gebinden sind bspw. zu Gruppen zusammengefasste Behälter, die mit einer gemeinsamen Folienumhüllung versehen sind. Wahlweise können auch einzelne Behälter in der Kartonschale angeordnet sein, so dass erst die Kartonschale zusammen mit den darin befindlichen Behältern ein Gebinde bildet. Die fertig verklebte Kartonschale mit den darin befindlichen Behältern oder Gebinden können anschließend ggf. nochmals mit einer Folie, insbesondere mit einer aufgeschrumpften Folie umhüllt werden. Wenn im vorliegenden Zusammenhang von Behältnissen oder Behältern die Rede ist, so können dies bspw. Flaschen mit Getränken sein. Die Behälter können jedoch auch Kartonverpackungen mit Getränken oder anderen Lebensmitteln oder auch andere Arten von Behältern sein.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
Fig. 1 zeigt eine schematische Darstellung einer Verpackungsmaschine für Behälter bzw. Gebinde.
Fig. 2 zeigt eine erste Ausführungsform eines seitlichen Führungselements der Maschine gemäß Fig. 1 in schematischer Darstellung.
Fig. 3 zeigt eine Detailansicht III der Fig. 2.
Fig. 4 zeigt eine weitere Detailansicht des Führungselements gemäß Fig. 2.
Fig. 5 zeigt eine weitere Ausführungsform eines seitlichen Führungselements der Maschine gemäß Fig. 1 in schematischer Darstellung.
Fig. 6 zeigt eine Draufsicht auf das Führungselement gemäß Fig. 5.

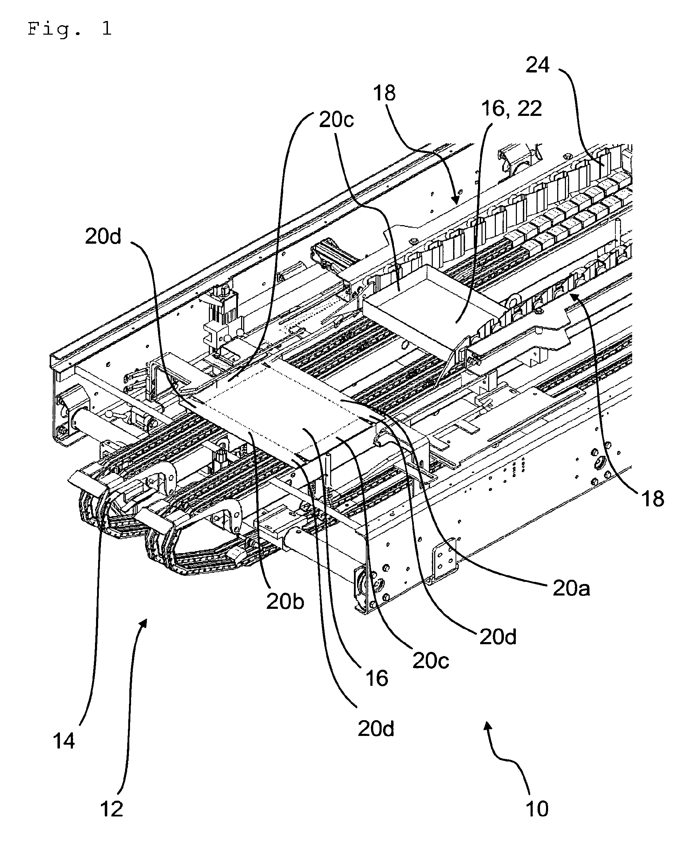

Die schematische Darstellung der Fig. 1 zeigt ein Ausführungsbeispiel einer Verpackungsmaschine 10 für Gebinde von Flaschen bzw. Getränkebehältern mit einer Horinzontalfördereinrichtung 12 in Form eines umlaufenden Förderbandes 14 für die zu Gebinden gruppierten und/oder mit einer Umhüllung aus Folie o. dgl. versehenen Getränkebehälter. Die Verpackungsmaschine 10 weist eine Einrichtung zur Zuführung von flachen Kartonbögen 16 an der Bodenseite der Gebinde auf. Die hier nicht dargestellten Gebinde werden jeweils auf den Kartonbögen 16 stehend gefördert. Weiterhin sind seitliche Führungselemente 18 zum Verpressen und/oder Falten von über die Grundfläche des Gebindes überstehenden seitlichen Randabschnitten 20 des Kartonbogens 16 nach oben und zum Andrücken der Ränder 20 gegen die Seiten des jeweiligen Gebindes vorgesehen.

Zusätzliche Einrichtungen zum Falten von in Transportrichtung vorderen und hinteren Randabschnitten 20a sind in Fig. 1 nicht dargestellt. Diese vorderen Randabschnitte 20a und hinteren Randabschnitte 20b werden nach oben gefaltet, bevor der Kartonbogen 16 die seitlich angeordneten Führungselemente 18 erreicht. Wahlweise können auch die in Transportrichtung seitlich angeordneten Randabschnitte 20c bereits vor Erreichen der durch die gegenüber liegend angeordneten Führungselemente 18 gebildeten Gasse nach oben gefaltet. Überlappende Eckbereiche 20d, die jeweils seitlich an den vorderen und hinteren Randabschnitten 20a und 20b angeordnet sind, werden zudem in Richtung zu den seitlichen Randabschnitten 20c gefaltet. Dies kann wahlweise mit Hilfe der Führungselemente 18 oder mittels gesonderter Einrichtungen (nicht dargestellt) erfolgen.

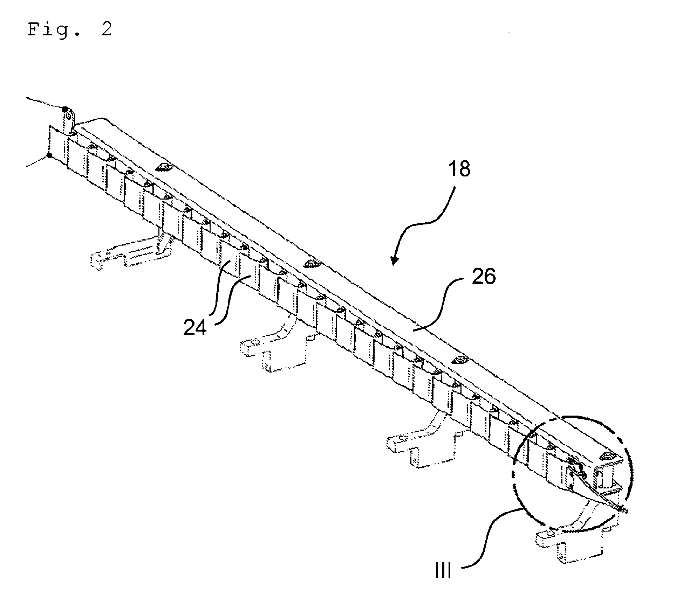

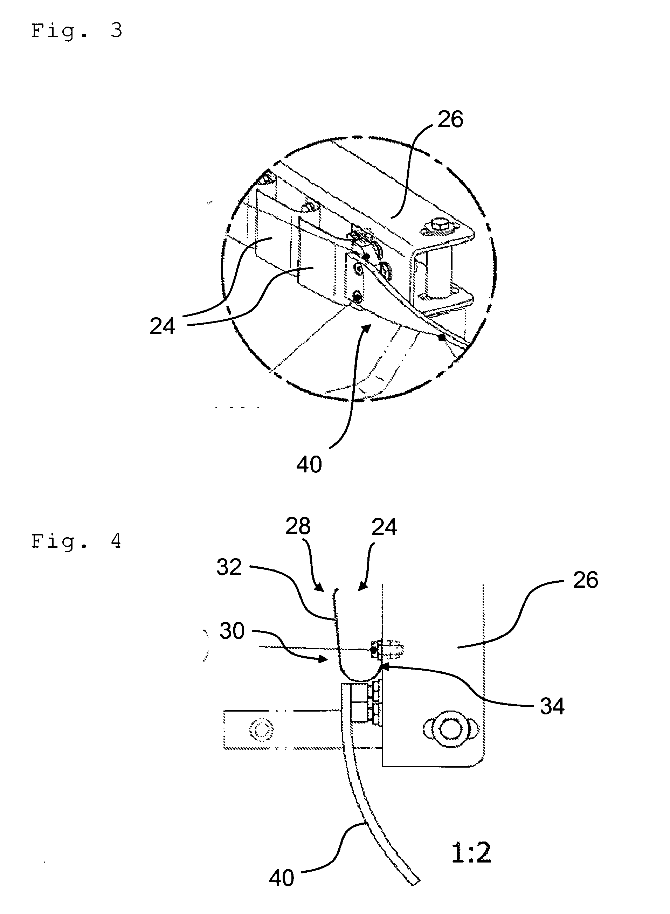

Diese überlappenden Randabschnitte bzw. Eckbereiche 20d werden an ihren Oberseiten zuvor mit einem Klebemittel wie bspw. einem Heißleim versehen, so dass sie mit Hilfe der Führungselemente 18 nicht nur seitlich an die seitlichen Randabschnitte 20c unter Abstützung gegen das Gebinde angedrückt, sondern gleichzeitig dort verklebt und diese Klebeverbindungen fest verpresst werden können. Die Führungselemente 18 üben eine definierte Andrückkraft auf die nach oben gefalteten Randabschnitte 20c und 20d des Kartonbogens 16 und die Seitenflächen des Gebindes aus. Dies wird dadurch erreicht, dass die Führungselemente 18 elastisch ausgebildet sind, wie anhand der folgenden Figuren 2 bis 6 näher erläutert wird.

Wie bereits in Fig. 1 angedeutet, kann ein seitlicher Abstand der gegenüberliegend angeordneten Führungselemente 18 in entspannter Lage etwas geringer sein als eine Breite eines zwischen den Führungselementen 18 hindurch geförderten Gebindes, das im vorliegenden Zusammenhang durch einen bereits gefalteten Karton 16 angedeutet ist. Die elastisch nach außen ausweichenden Führungselemente 18 können auf diese Weise eine Andrückkraft auf die nach oben gefalteten Randabschnitte 20 des Kartonbogens 16 in Richtung zu den Seiten des Gebindes ausüben und dadurch zudem das Verpressen und das Aushärten der Klebeverbindung unterstützen, mit der die Ränder mit dem Gebinde verbunden werden, um eine stabile Kartonschale 22 zu bilden.

Die Führungselemente 18 sind jeweils durch eine Vielzahl von nebeneinander angeordneten und eng voneinander beabstandeten Blattfederelementen 24 gebildet, so dass an die zwischen den Führungselementen 18 hindurch geförderten Gebinde die nach oben gefalteten Kartonränder 20 angedrückt werden. Die Blattfederelemente 24 sind aus federelastischem Metall gefertigt.

Wie anhand der Figuren 2 bis 6 verdeutlicht, weisen die Blattfederelemente 24 eine federnde Nachgiebigkeit in horizontaler Richtung auf, so dass eine seitliche Andrückkraft auf die an den Führungselementen 18 vorbei geförderten Gebinde ausgeübt wird. Die Federelemente 24 sind jeweils einseitig an Halteschienen 26 befestigt, so dass die freien Enden 28 der Blattfederelemente 24 zur Führung der Gebinde dienen, die an den Führungselementen vorbei streifen, wobei gleichzeitig die Blattfederelemente 24 mehr oder weniger stark verformt werden. So weist jeweils ein freies Ende 28 jedes Federelements 24 in Transportrichtung der Horizontalfördereinrichtung 12 bzw. des Förderbandes 14 schräg von der Halteschiene 26 weg und kann durch das anliegende und gleitend daran vorbei geförderte Gebinde in Richtung zur Halteschiene 26 gedrückt werden.

Die Figuren 2 bis 4 verdeutlichen eine erste Ausführungsvariante der Blattfederelemente 24, die jeweils als U-förmiges Blech 30 ausgebildet sind, deren längerer Schenkel 32 das federnde freie Ende 28 bildet und deren kürzerer Schenkel 34 an der Halteschiene 26 verschraubt ist.

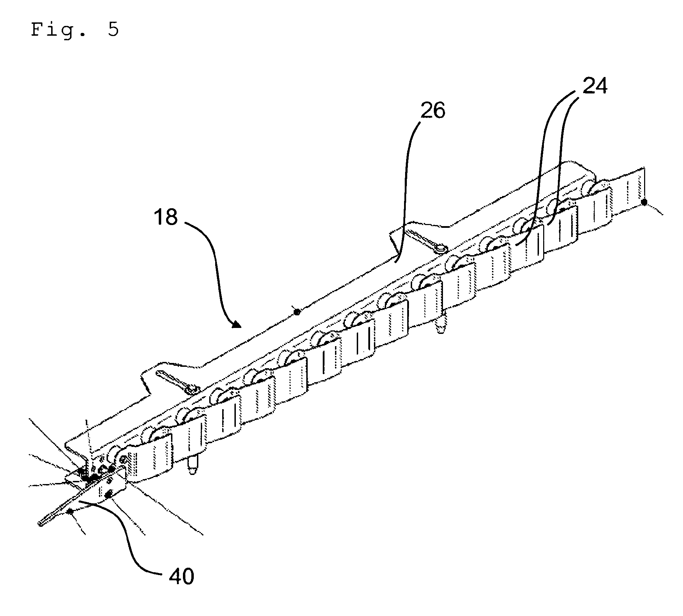

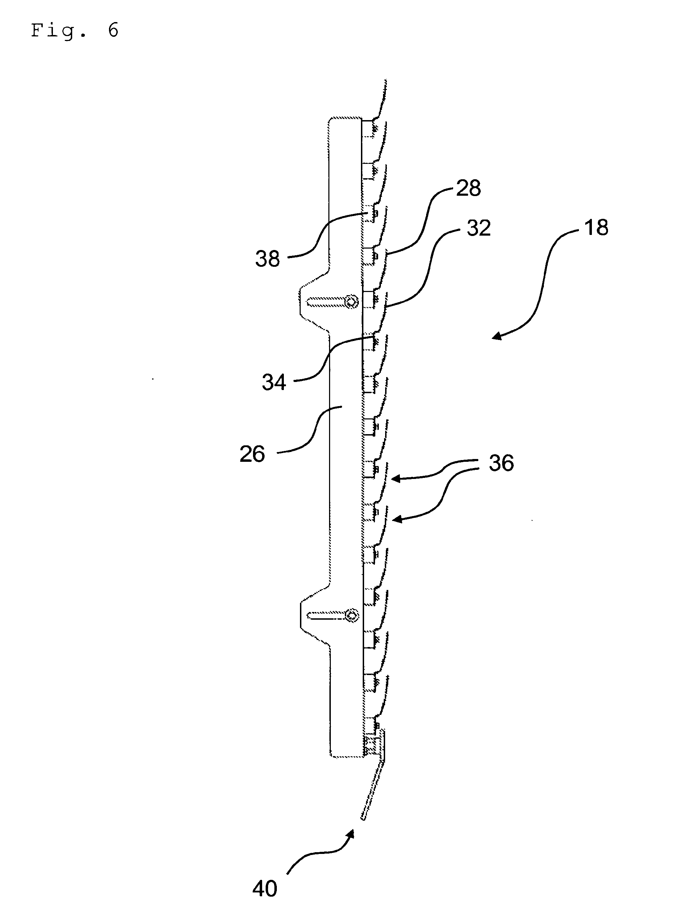

Die Figuren 5 und 6 verdeutlichen eine zweite Ausführungsvariante der Blattfederelemente 24, die hier jeweils als S-förmiges Blech 30 ausgebildet sind, deren längerer Schenkel 32 das federnde freie Ende 28 bildet und deren kürzerer Schenkel 34 mittels eines elastischen Sockels 38 an der Halteschiene 26 verschraubt ist. Der längere Schenkel 32 jedes S-förmigen Blechs 36 steht nicht exakt parallel zum an der Halteschiene 26 verschraubten kürzeren Schenkel 34, sondern schließt mit der Längsachse der Halteschiene 26 einen spitzen Winkel ein und ragt somit leicht schräg von dieser ab.

Weiterhin sind in Transportrichtung vor den Führungselementen 18 jeweils keil- bzw. pfeilförmige Abweiser 40 zum Aufrichten der seitlich über das Gebinde ragenden Kartonränder 20c und zum Anlegen dieser seitlichen Randabschnitte 20c an die Seitenflächen des Gebindes angeordnet. Diese Abweiser 40 dienen dazu, die zunächst flach liegenden und über Perforationen oder Sollknickstellen verfügenden seitlichen Kartonränder 20c leicht anzuheben und in ihre vorgesehene Position zu überführen, in der sie dann mittels der Führungselemente 18 an die seitlich überlappenden Eckbereiche 20d der vorderen und hinteren Randabschnitte 20a und 20b angedrückt und die Klebeverbindungen gegeneinander verpresst werden (vgl. Fig. 1).

Die in den Figuren 2 bis 6 gezeigten Abweiser 40 sind allerdings optional zu verstehen. Wahlweise können die seitlichen Randabschnitte 20c auf andere Weise nach oben gefaltet werden, so dass in diesem Fall lediglich die Blattfederelemente 24 zum Verpressen der Klebeverbindung zwischen den Eckbereichen 20d und den Rändern der seitlichen Randabschnitte 20c notwendig sind.

Die Federelemente 24 können entsprechend Fig. 5 und Fig. 6 jeweils elastisch an den seitlichen Halteschienen 26 verankert sein. Vorzugsweise sind die Federelemente 24 jeweils Wärme leitend ausgebildet, so dass sie zusätzlich dazu dienen können, überschüssige Wärme von den Klebestellen des Kartons aufzunehmen. Da die Kartonränder 20 üblicherweise mit Heißleim verklebt werden, können die Federelemente 24 somit auch zur Abführung der im Heißleim befindlichen Wärmeenergie dienen, was die schnellere Aushärtung der Klebeverbindung fördert. Um eine gute Wärmeleitung zu gewährleisten, sind die Federelemente 24 im gezeigten Ausführungsbeispiel jeweils aus Metall gefertigt. Die elastische Aufhängung der Federelemente 24 ist dabei so dimensioniert, dass ein definierter Wärmeübergang an die Halteschienen 26 gewährleistet ist.

In den Figuren 2 bis 6 ist weiterhin verdeutlicht, dass die seitlich des Transportbandes 14 angeordneten Führungselemente 18 in ihrem Abstand zueinander justierbar sind. Zu diesem Zweck sind die Halteschienen 26 mit Langlöchern zur Befestigung versehen, so dass durch Lösen der entsprechenden Verschraubungen und durch seitliches Verschieben der Halteschienen eine Breitenverstellung der Führungsgasse ermöglicht ist.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichenliste

- 10: Verpackungsmaschine
- 12: Horizontalfördereinrichtung
- 14: Förderband
- 16: Kartonbogen
- 18: Führungselement
- 20: Randabschnitt
- 22: Kartonschale
- 24: Blattfederelement
- 26: Halteschiene
- 28: freies Ende
- 30: U-förmiges Blech
- 32: langer Schenkel
- 34: kurzer Schenkel
- 36: S-förmiges Blech
- 38: elastischer Sockel
- 40: Abweiser

## Patentansprüche

1. Verpackungsmaschine (10) für Gebinde von Behältnissen wie Flaschen und/oder Getränkebehältern, mit einer Horizontalfördereinrichtung (12) für die zu Gebinden gruppierten und/oder mit einer Umhüllung aus Folie o. dgl. versehenen Behälter, mit einer Einrichtung zur Zuführung von flachen Kartonbögen (16) an der Bodenseite der Behälter und/oder Gebinde, die jeweils auf dem Kartonbogen (16) stehend gefördert werden, mit Einrichtungen zum Falten von in Transportrichtung vorderen und hinteren, über die Grundfläche des Gebindes überstehenden seitlichen Rändern (20) des Kartonbogens (16) nach oben, und mit seitlichen Führungselementen (18) zum Anpressen und/oder zum vorhergehendem Falten von in Transportrichtung seitlich über die Grundfläche des Gebindes überstehenden Rändern (20) des Kartonbogens (16) nach oben, wobei überlappende Randabschnitte der seitlichen mit den vorderen und/oder hinteren Rändern (20) des Kartonbogens (16) jeweils mit Klebemittel versehen sind, wobei die Führungselemente (18) zumindest abschnittsweise eine definierte Andrückkraft auf die nach oben gefalteten Ränder (20) des Kartonbogens (16) und die Seitenflächen des Gebindes ausüben, wobei die Führungselemente (18) zumindest abschnittsweise elastisch ausgebildet sind, **dadurch gekennzeichnet, dass** die Führungselemente (18) jeweils durch eine Vielzahl von nebeneinander angeordneten Blattfederelemente (24) gebildet sind, welche jeweils einseitig an Halteschienen (26) befestigt sind und eine federnde Nachgiebigkeit in horizontaler Richtung aufweisen, wobei die Federelemente aus federelastischem Metall gefertigt sind und wobei ein freies Ende (28) jedes Federelementes in Transportrichtung der Horizontalfördereinrichtung (12) schräg von der Halteschiene (26) weg weist und durch das anliegende und gleitend daran vorbei geförderte Gebinde in Richtung zur Halteschiene (26) drückbar ist.

2. Verpackungsmaschine nach Anspruch 1, **dadurch gekennzeichnet, dass** ein seitlicher Abstand der gegenüberliegend angeordneten Führungselemente (18) in entspannter Lage geringer ist als eine Breite eines zwischen den Führungselementen (18) hindurch geförderten Gebindes.

3. Verpackungsmaschine nach einem der Ansprüche 1 bis 2, **dadurch gekennzeichnet, dass** in Transportrichtung vor den Führungselementen (18) jeweils keilförmige Abweiser (40) zum Aufrichten der seitlich über das Gebinde ragenden Kartonränder (20) und zum Anlegen der Ränder (20) an die Seitenflächen des Gebindes angeordnet sind.

4. Verpackungsmaschine nach einem der Ansprüche 1 bis 3, **dadurch gekennzeichnet, dass** die Federelemente jeweils elastisch an den seitlichen Halteschienen (26) verankert sind.

5. Verpackungsmaschine nach einem der Ansprüche 1 bis 4, **dadurch gekennzeichnet, dass** die Federelemente jeweils Wärme leitend ausgebildet sind.

6. Verpackungsmaschine nach einem der Ansprüche 1 bis 5, **dadurch gekennzeichnet, dass** die Führungselemente (18) in ihrem Abstand zueinander justierbar ausgebildet sind und/oder dass die Halteschienen (26) mit Langlöchern und Verschraubungen zur Befestigung versehen sind.

## Claims

1. Packaging machine (10) for packs of containers, such as bottles and / or beverage containers, with a horizontal conveying means (12) to transport the containers grouped as packs and/or wrapped with a foil or the like, with means for supplying flat paperboard sheets (16) at the bottom side of the containers and/or packs, wherein the containers and/or packs are transported in a standing manner on the paperboard sheet (16), with means for folding upward front and back edge portions (20) of the paperboard sheet (16) in the transport direction, each of which extends beyond the footprint of the pack, with lateral guide elements (18) for folding upward lateral edges (20) of the paperboard sheet (16) extending laterally beyond the footprint of the grouped containers or the pack in transport direction, whereby edge portions of the lateral edges (20) overlapping with front and/or back edges (20) of the paperboard sheet (16) are provided with an adhesive, wherein at least portions of the guide elements (18) exert a defined pressing force on the upward-folded edges (20) of the paperboard sheet (16) and the side faces of the pack; wherein at least portions of the guide elements (18) are designed to be elastic, **characterized in that** the guide elements (18) are each formed of a plurality of flat spring elements (24) arranged one next to the other, and whereby each lateral guide element (18) has a support rail (26) to which the spring elements (24) are fastened on one side, whereby the spring elements have an elastic resilience in the horizontal direction, wherein the spring elements are made of spring-elastic metal and wherein a free end (28) of each spring element extends away from the support rail (26) at an oblique angle in the transport direction of the horizontal conveying means (12) and is pushed towards the support rail (26) by the pack that touches it and is slidingly transported past it.

2. Packaging machine (10) according to claim 1, **characterized in that** a lateral spacing of the opposing guide elements (18) in an unloaded state is smaller than the width of a pack passing between the lateral guide elements (18).

3. Packaging machine (10) according to claim 1 or 2, **characterized in that** wedge-shaped deflectors (40) are arranged upstream of the guide elements (18) in the transport direction for raising the paperboard edges (20) extending laterally beyond the pack and for positioning the edges (20) against the side faces of the pack.

4. Packaging machine (10) according to one of the claims 1 or 3, **characterized in that** the spring elements are each elastically attached to the lateral support rails (26).

5. Packaging machine (10) according to one of the claims 1 or 4, **characterized in that** the spring elements are each designed to be thermally conductive.

6. Packaging machine (10) according to one of the claims 1 or 5, **characterized in that** the distance between the guiding elements (18) is adjustable and / or that the support rails (26) have slotted holes and screw connections for the fixation.

## Revendications

1. Machine d'emballage (10) pour pack de récipients comme des bouteilles et/ou récipients de boissons, avec un équipement de manutention horizontale (12) pour les récipients regroupés en packs et/ou les récipients dotés d'une enveloppe en feuille ou autre semblable, avec un équipement pour l'alimentation de rames de carton plates (16) sur la face de fond des récipients et/ou packs qui sont transportés chacun debout sur la rame de carton (16), avec des équipements pour le pliage vers le haut de bords latéraux (20) avant et arrière de la rame de carton 816) débordant dans le sens de transport de la surface de base du pack, et avec des éléments de guidage latéraux (18) pour la pression et/ou le pliage précédent vers le haut de bords (20) de la rame de carton (16) débordant dans le sens de transport de la surface de base du pack, étant donné que des segments marginaux chevauchants des bords latéraux avec les bords (20) avant et/ou arrière de la rame de carton (16) comportent chacun de la colle, étant donné que les éléments de guidage (18) exercent au moins par segment force de pression sur les bords (20) repliés vers le haut de la rame de carton (16) et les surfaces latérales du pack, étant donné que les éléments de guidage (18) sont au moins par segment élastiques, **caractérisée en ce que** les éléments de guidage (18) sont formés chacun par une pluralité d'éléments à ressorts à lames (24) disposés l'un à côté de l'autre qui sont chacun fixés sur un côté sur des rails de support (26) et présentent une élasticité dans le sens horizontal, étant donné que les éléments résilients sont fabriqués en métal élastique à ressort, et étant donné qu'une extrémité libre (28) de chaque élément résilient est orienté obliquement par rapport au rail de support (26), s'éloignant de ce dernier, dans le sens de transport de l'équipement de manutention horizontale (12) et peut être pressé par le pack adjacent et transporté par glissement le long de ce dernier dans le sens du rail de support (26).

2. Machine d'emballage selon la revendication 1, **caractérisée en ce qu'**un écart latéral des éléments de guidage (18) disposés l'un en face de l'autre est, en position détendue, plus petite qu'une largeur d'un pack transporté à travers les éléments de guidage (18).

3. Machine d'emballage selon l'une quelconque des revendications 1 à 2, **caractérisée en ce que** sont disposés chaque fois dans le sens de transport, en amont des éléments de guidage (18), des déflecteurs (40) cunéiformes pour le redressement des bords de carton (20) débordant latéralement au-dessus du pack et pour l'apposition des bords (20) aux surfaces latérales du pack.

4. Machine d'emballage selon l'une quelconque des revendications 1 à 3, **caractérisée en ce que** les éléments résilients sont chacun ancrés élastiquement sur les rails de support latéraux (26).

5. Machine d'emballage selon l'une quelconque des revendications 1 à 4, **caractérisée en ce que** les éléments résilients sont chacun thermoconducteurs.

6. Machine d'emballage selon l'une quelconque des revendications 1 à 5, **caractérisée en ce que** les éléments de guidage (18) sont réglables quant à leur écart l'un par rapport à l'autre et/ou **en ce que** les rails de support (26) sont dotés de trous oblongs et de raccords à vis pour la fixation.
